# EUROPÄISCHE PATENTSCHRIFT

(11) **EP 0 360 037 B1**
(45) Veröffentlichungstag und Bekanntmachung des Hinweises auf die Patenterteilung: **17.11.1994**
(21) Anmeldenummer: 89115842.0
(22) Anmeldetag: 28.08.1989
(51) Int. Cl.: G10K 11/36, G10K 11/16

(54) **Dämpfungsmasse für Oberflächen-wellenbauelemente**
Damping mass for SW elements
Masse d'atténuation pour dispositifs à ondes de surface acoustiques

(30) Priorität: 19.09.1988 DE 3831814
(43) Veröffentlichungstag der Anmeldung: 28.03.1990
(73) Patentinhaber: SIEMENS AKTIENGESELLSCHAFT, 80333 München (DE)
(72) Erfinder: Bayer, Heiner, Dr. rer. nat., D-8037 Olching (DE); Rogalli, Michael, Dr. rer. nat., D-8000 München 83 (DE); Dittrich, Frank, D-8011 Kirchseeon (DE); Stelzl, Hans, D-8011 Vaterstetten (DE)

(56) Entgegenhaltungen:
- EP-A- 0 098 599
- US-A- 4 090 153

## Beschreibung

Die Erfindung betrifft eine akustisch angepaßte Reaktionsharzmasse zur dämpfenden Beschichtung von Oberflächenwellenbauelementen und deren Verwendung.

Oberflächenwellenbauelemente, zum Beispiel Oberflächenwellenfilter sind elektronische Bauelemente, die der Signalverarbeitung von elektromagnetischen Wellen mit Informationsgehalt dienen. Bei den zum Beispiel in Radaranlagen, Fernseh- und Videogeräten eingesetzten Bauteilen wird der das Signal bzw. die Information tragende elektrische Impuls oder Strom in mechanische bzw Schallschwingungen sogenannte Oberflächenwellen, umgewandelt. Zur elektroakustischen Wandlung bzw. zur Erzeugung der Oberflächenwellen werden piezoelektrische Wandler verwendet, welche aus bestimmten Keramiken oder kristallinen Materialien bestehen, zum Beispiel aus Lithiumniobat. Durch einen geeigneten Aufbau des Wandlers, speziell durch eine besondere geometrische Ausgestaltung der "schallerzeugenden" Wandleroberfläche werden die akustischen Eigenschaften dieses Wandlers beeinflußt. Dadurch ist es auch möglich, gezielt das akustische Signal zu modifizieren und zum Beispiel spezielle Wellenlängenbereiche aus dem Gesamtspektrum herauszufiltern, zum Beispiel die Zwischenfrequenz eines Fernseh- oder Videosignals von ca. 38 MHz. Um ein unerwünschtes Echo durch Reflexion der nicht vollständig wieder in elektrische Signale zurückverwandelbaren oder der in falscher Richtung sich fortpflanzenden Oberflächenwellen zu vermeiden, wird die Oberfläche des Wandlerelements mit einer Dämpfungsmasse versehen, welche die Energie der auslaufenden Wellen aufzehrt. Diese nur in bestimmten Bereichen des Bauelementes wie den Chipkanten aufgebrachte Masse besteht bislang wegen der geforderten mechanisch-dynamischen Eigenschaften aus organischem Material, zum Beispiel einem Polyamid.

Das Aufbringen dieser Dämpfungsschicht kann nach verschiedenen Verfahren erfolgen. So werden zum Beispiel Formstücke aus einem extrudierten Material zugeschnitten, auf der Wandleroberfläche aufgebracht und schließlich in einem thermischen Schritt durch Aufschmelzen mit der Oberfläche fest verbunden. Dieser Schritt muß für jedes Bauelement einzeln durchgeführt werden, ist umständlich und zeitaufwendig. Gebräuchlich sind auch Druckverfahren wie zum Beispiel Siebdruck.

Aufgabe der vorliegenden Erfindung ist es daher, ein Material für die Bedämpfung eines Oberflächenwellenfilters anzugeben, welches die geforderten akustischen Eigenschaften erfüllt, dazu frei von anorganischen Füllstoffen sein soll und in einem einfachen Verfahren auf die obengenannten Bereiche der Substratoberfläche aufzubringen ist.

Diese Aufgabe wird durch eine akustisch angepaßte Reaktionsharzmasse der angegebenen Art erfüllt, welche erfindungsgemäß enthält
a) ein oder mehrere Epoxidharze,
b) eine oder mehrere Di- oder Polycarbonsäuren bzw. saure Ester von Di- oder Polycarbonsäuren,
c) ein aliphatisches oder heteroaromatisches Amin in einem die Vernetzung der Reaktionsharzmasse katalysierenden Anteil sowie
d) Lösungsmittel,

wobei die Aminwasserstoff- und Säureäquivalente zusammen im Unterschuß gegenüber den Epoxidäquivalenten vorliegen und die vermischte Reaktionsharzmasse eine für die Applikation erforderliche Viskosität und Thixotropie aufweist.

Weiterhin liegt es im Rahmen der Erfindung, daß das Epoxidharz vom Glycidylethertyp ist, insbesondere auf der Basis von Bisphenol A oder Phenol- bzw. Kresolnovolak.

Weitere Ausgestaltungen der Erfindung sowie die Verwendung dieser Reaktionsharzmassen sind den Unteransprüchen zu entnehmen.

Diese durch Amine katalysiert mit Carbonsäuren härtende Reaktionsharzmasse ist für eine Applikation im Siebdruckverfahren bestens geeignet. Sie läßt sich in dicken Schichten blasenfrei aufbringen und besitzt eine ausreichend lange Gebrauchsdauer von mehreren Tagen, was für einen wirtschaftlich durchzuführenden Siebdruck von großer Bedeutung ist. Die gute Siebdruckbarkeit der Masse wird ohne Verwendung von Füllstoffen erreicht. Als hervorragendste Eigenschaft besitzt die Reaktionsharzmasse außerdem sehr gute akustisch dämpfende Eigenschaften. Weitere Vorteile dieser Masse sind die große Feuchteunempfindlichkeit und die rasche Härtung. Die verwendeten Ausgangsstoffe sind in Anwendung und Entsorgung unbedenklich. Sie weisen außerdem nur einen niedrigen Gehalt an Chloridionen und chemisch gebundenem Chlor auf, was für deren Verwendung auf elektronischen Bauelementen wegen der dadurch reduzierten Korrosionsanfälligkeit von besonderer Bedeutung ist.

Für das Auftragen des Reaktionsharzes mittels Siebdrucktechnik ist eine gut verlaufende, also hinreichend niederviskose Masse erwünscht, um einen gleichmäßigen glatten Film zu erhalten. Als geeignet erweisen sich zum Beispiel Harze mit Viskositäten zwischen 30000 und 90000 mPas/25°C, die auch im Hinblick auf das Siebdruckbild gute Ergebnisse zeigen. Die Anfangsviskosität läßt sich leicht durch den Lösungsmittelgehalt der Reaktionsharzmasse einstellen. Für den gewünschten Bereich zwischen 30000 und 90000 mPas/25°C ist in einer Ausführungsform ein Lösungsmittelgemisch aus Ethoxypropylacetat/Benzylalkohol in einem Anteil von ca. 22 bis 28 Gewichtsprozent einzusetzen. Bei einem geringeren Lösungsmittelanteil wird ein steiler Anstieg der Viskosität der Reaktionsharzmasse beobachtet. Doch auch bei einer gebrauchsfertigen Mischung mit geeigneter Viskosität ist mit der Zeit ein Anstieg der Gele zu verzeichnen. Einerseits geht Lösungsmittel durch Verdunstung auf dem Sieb verloren, andererseits setzen ab dem Zeitpunkt der Vermischung chemische Reaktionen ein, die zu einer Härtung und somit zu einem Viskositätsanstieg führen. Es ist deshalb erforderlich, hochsiedende Lösungsmittel zu verwenden, um die Verdunstungsverluste gering zu halten. Andererseits müssen die Lösungsmittel-Bestandteile der Masse nach dem Druck unter definierten Ablüftbedingungen vollständig zu entfernen sein.

Nach dem blasenfreien Aufbringen soll die Masse hoher viskos werden, um das weitere Verlaufen zu verhindern und ein konturlinientreues, scharfes Druckbild zu erzeugen und bis zum Ablüftungs- und Härtungsprozeß zu stabilisieren. Diese einander scheinbar entgegenlaufenden Forderungen werden durch thixotrope Systeme erfüllt. In diesen Systemen nimmt die Viskosität bei Einwirkung einer Scherkraft auf die Masse ab und stellt sich bei Beendigung der Scherbeanspruchung wieder auf den ursprünglichen Wert ein. Der Thixotropieindex (Quotient zweier Viskositäten, die bei Scherraten gemessen werden, die sich um den Faktor 10 unterscheiden) ist ein Maß für thixotropes Verhalten und liegt bei der erfindungsgemäßen Reaktionsharzmasse eines Ausführungsbeispiels bei ca. 1,2. Dies zeigt, daß es sich hier um ein schwach thixotropiertes System handelt, welches für Siebdruckanwendungen geeignet ist.

Die fertige Reaktionsharzmasse hat zwar eine Gebrauchsdauer von mehreren Tagen (die Viskosität verdoppelt sich im Verlauf von 3 bis 4 Tagen), doch ist es ratsam, Harz- und Härterkomponente jeweils getrennt voneinander vorzubereiten und erst kurz vor der Verwendung im stöchiometrischen Verhältnis zu vermischen. So kann die Harzkomponente zum Beispiel aus dem oder den Harzen, Lösungsmitteln und gegebenenfalls weiteren für Siebdruckzusammensetzungen bekannten Hilfsmitteln bestehen. Dies sind zum Beispiel Additive, die in der gebrauchsfertigen Harzmasse das Aufsteigen und Platzen von Blasen in einer "gedruckten" Schicht aus Reaktionsharzmasse begünstigen, die aber frei von Feststoffen aus anorganischem Material sind. Die Härterkomponente umfaßt dann die übrigen Bestandteile, nämlich die Di- oder Polycarbonsäuren bzw. deren saure Ester, ein aliphatisches oder heteroaromatisches Amin sowie weiteres Lösungsmittel. Diese Komponenten werden in verschlossenen Gefäßen unter leicht erhöhter Temperatur homogenisiert und können dann als stabile Lösung oder Emulsion für mehrere Monate ohne nennenswerten Anstieg der Viskosität gelagert werden.

Eine weitere kennzeichnende Größe ist neben der Viskosität die Stöchiometrie, die durch den Epoxidwert für die Harzkomponente und die Säurezahl für die Härterkomponente festgelegt wird. Unter dem Epoxidwert versteht man die Anzahl der Epoxidäquivalente pro Gewichtseinheit, während die Säurezahl die Anzahl der Säureäquivalente pro Gewichtseinheit wiedergibt. Aus beiden Werten wird das Mischungsverhältnis der Einzelkomponenten errechnet, um eine für den ordnungsgemäßen Netzwerkaufbau nötige Stöchiometrie zu erlangen. Wird vorteilhafterweise für die Härterkomponente ein Amin verwendet, welches an Stickstoff gebundene H-Atome trägt, so müssen die Aminwasserstoffäquivalente in der Härtekomponente berücksichtigt werden. Für eine gebrauchsfähige Reaktionsharzmasse sollen Aminwasserstoff- und Säureäquivalente zusammen im Unterschuß gegenüber den Epoxidäquivalenten vorliegen. Erst bei dieser Zusammensetzung bzw. Stöchiometrie werden gute Formstoffeigenschaften und ein gutes Dämpfungsverhalten der gehärteten Reaktionsharzmassen erreicht.

Für die Harzkomponente können verschiedene Epoxidharze verwendet werden. Möglich sind zum Beispiel Glycidylether von Kresolnovolak, unterschiedlich epoxidierte Polybutadiene und insbesondere Festharze vom Diglycidylethertyp auf der Basis von Bisphenol A sowie Mischungen dieser Harze. Die Glycidyletherharze werden als Spezialprodukte für elektronische Anwendungen bevorzugt, weil sie für ihre Verbindungsklasse geringe Gehalte an Chloridionen und chemisch gebundem Chlor aufweisen. Andere einsetzbare Harze können sogar in völlig chlorfreien Prozessen hergestellt werden, beispielsweise teilepoxidierte ungesättigte Polymere. Vorteilhafterweise werden erfindungsgemäß auch Polybutadiene eingesetzt, bei denen 4 - 50 Prozent der Doppelbindungen epoxidiert sind. Der Rest der Doppelbindungen kann hydriert sein.

Bei den als Härter eingesetzten Säuren handelt es sich um Di- oder Polycarbonsäuren. Bevorzugt sind Derivate von gesättigten 1,2- bis 1,4-Dicarbonsäuren bzw. deren Isomerengemische, insbesondere Abkömmlinge von Bernsteinsäure und Adipinsäure. Besonders bevorzugt ist Trimethyladipinsäure. Doch ist es auch möglich, ungesättigte oder höhermolekulare Dicarbonsäuren oder saure Ester derselben einzusetzen. Möglich ist zum Beispiel auch der saure Ester aus Propandiol und Hexahydrophthalsäure oder der Monoethylester der Hexahydrophthalsäure.

Die Auswahl der als basischer Katalysator infrage kommenden Verbindungen umfaßt aliphatische und heteroaromatische Amine, insbesondere substituierte Imidazole. Besonders bevorzugt ist 2-Ethyl-4-methylimidazol (2, 4-EMI). Das Amin wird so gewählt, daß es die Reaktion der Carbonsäurefunktionen mit den Epoxidgruppen katalysiert und die Homopolymerisation der Epoxidgruppen bewirkt. Neben der guten katalytischen Aktivität sollte das Amin noch einen ausreichend hohen Siedepunkt aufweisen, um bei den Abtrockenbedingungen nicht aus der Reaktionsharzmasse zu entweichen. Gleichzeitig sind an Stickstoff gebundene H-Atome im Amin von Vorteil, welche beim Härten der Reaktionsharzmasse einen Einbau des Amins in das Polymer durch Reaktion mit Epoxidfunktionen ermöglichen. Dadurch wird ein Abdampfen des Amins auf dem fertigen mit gehärtetem Reaktionsharz versehenen Bauelement vermieden. Das Amin liegt nur in einem katalytischen Anteil vor und wird im Unterschuß gegenüber der Carbonsäure eingesetzt.

Auch das Lösungsmittel weist einen hohen Siedepunkt von mindestens ca. 100°C auf. Es kann eine oder mehrere Komponenten umfassen, welche aus der Verbindungsklasse der Ether, Ester, Alkohole oder verwandter mehrfunktioneller Verbindungen ausgewählt sind. Besonders vorteilhafte Ergebnisse werden mit Benzylalkohol enthaltenden Mischungen erzielt, insbesondere in Verbindung mit Ethoxypropylacetat.

Im folgenden wird die Erfindung anhand von drei Figuren und zwei Ausführungsbeispielen näher erläutert.
- Die Figur 1: zeigt ein Oberflächenwellenbauelement im Querschnitt, hier ein Oberflächenwellenfilter.
- Die Figuren 2 und 3: zeigen das Viskositätsverhalten einer erfindungsgemäßen Reaktionsharzmasse im zeitlichen Verlauf (Figur 2) und in Abhängigkeit vom Lösungsmittelgehalt (Figur 3).

### Erstes Ausführungsbeispiel:

Herstellung der Komponenten und der Reaktionsharzmasse.

Beispielhaft für die Herstellung von Harz- und Härterkomponente und für die Zubereitung einer gebrauchsfertigen Reaktionsharzmasse im Labormaßstab wird im folgenden das Verfahren zur Herstellung einer bestimmten Reaktionsharzzusammensetzung angegeben:

Harzkomponente. 250 Gramm Quatrex 1410® werden in einer 500 ml Glasflasche mit Magnetfisch vorgelegt. Nach Zugabe von 1 Gramm Modaflow®, 53 Gramm Benzylalkohol und 44 Gramm Ethoxypropylacetat wird das Gefäß verschlossen und zwei Stunden bei 110° gerührt. Die so erhaltene blaßgelbe, leicht getrübte hochviskose Flüssigkeit von ca. 24000 mPa.s/25°C kann für mehrere Monate unverändert aufbewahrt werden.

Härterkomponente: 164 Gramm Trimethyladipinsäure, 45 Gramm 2-Ethyl-4-methylimidazol und 40 Gramm Ethoxypropylacetat werden 1,5 Stunden bei 90°C gerührt. Man erhält eine gelb bis rotbraune hochviskose Flüssigkeit von ca. 19000 mPa.s/25°C die unverändert mehrere Monate gelagert werden kann.

Reaktionsharz: Zur Herstellung der Reaktionsharzmasse werden 100 Gewichtsteile Harzkomponente und 16 Gewichtsteile Härterkomponente vereinigt. Bei der fertigen Reaktionsharzmasse handelt es sich um eine beigebraune, opak schimmernde hochviskose Flüssigkeit (ca. 38000 mPa.s/25°C). Die höhere Viskosität im Vergleich zu den Einzelkomponenten ist darauf zurückzuführen, daß es sich bei der fertigen Reaktionsharzmasse um eine Emulsion handelt.

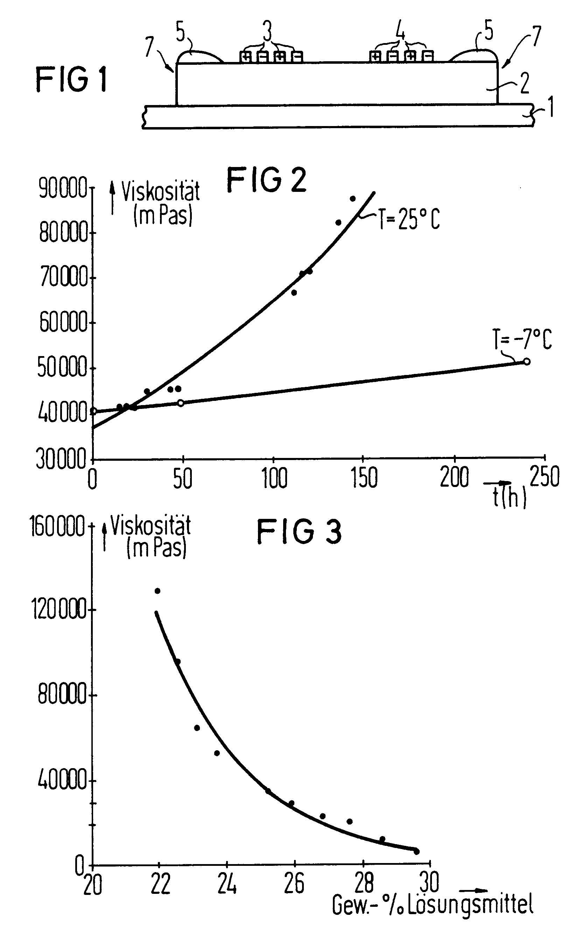

Figur 2 zeigt den Viskositätsanstieg der in verschlossenen Gefäßen aufbewahrten, fertigen Reaktionsharzmasse bei verschiedenen Temperaturen. Es zeigt sich, daß sich die Viskosität bei Raumtemperatur im Verlauf von drei bis vier Tagen verdoppelt. Daraus ergibt sich eine Gebrauchsdauer, bzw. eine Verwendbarkeit der Masse in einem Siebdruckverfahren von mehreren Tagen. Innerhalb dieser Zeit ist die Emulsion stabil, es ist keine Trennung der einzelnen Komponenten zu beobachten. Die flacher verlaufende Kurve der Figur 2 zeigt das Viskositätsverhalten bei minus 7°C. Wird die Reaktionsharzmasse bei dieser tieferen Temperatur aufbewahrt, verzögert sich die chemische Härtungsreaktion und ermöglicht eine längere Gebrauchsdauer der Mischung.

Figur 3 zeigt die Viskosität der Reaktionsharzmasse in Abhängigkeit vom Lösungsmittelgehalt. Durch Variation der Lösungsmittelzugabe läßt sich die Viskosität der Reaktionsharzmasse auf einen beliebigen Wert einstellen. Für eine im Siebdruck verwendbare Masse ist eine Anfangsviskosität zwischen 30000 und 90000 mPa.s/25°C erwünscht. Dafür sind Lösungsmittelgehalte von ca. 22 bis 28 Gewichtsprozent erforderlich.

### Zweites Ausführungsbeispiel:

Aufbringen und Härten der Reaktionsharzmasse

Die Reaktionsharzmasse wird im Siebdruckverfahren aufgetragen. Beim Aufdrucken zum Beispiel auf ein Oberflächenwellenfilter in einer Schichtdicke von ca. 30 µm zeigt die Masse ein gutes Verlaufsverhalten, läßt sich blasenfrei aufbringen, so daß ein kantenscharfer Druck erreicht wird. Die so erzielte gute Auflösung ermöglicht die Erzeugung feinster Strukturen, deren flacher Böschungswinkel Voraussetzung für gute akustische Eigenschaften des Oberflächenwellenfilters ist. Diese Eigenschaften lassen sich außerdem über mehrere Wafer oder über mehrere Ansätze der Reaktionsharzmasse reproduzieren, was unbedingte Voraussetzung für eine Großserienfertigung von Filtern ist.

Nach dem Aufbringen der Reaktionsharzmasse auf das Oberflächenwellenbauelement muß sämtliches Lösungsmittel aus der Masse vor dem Härten entfernt werden. Das Abdunsten des Lösungsmittels kann zum Beispiel durch Temperaturerhöhung, Verstärkung der äußeren Umluft oder durch Anlegen von Vakuum beschleunigt werden Bei rein thermischem Abdunsten läßt sich zum Beispiel nach einer Stunde Ablüften bei 70°C ein Masseverlust nachweisen, der ungefähr dem theoretischen Wert des Lösungsmittelgehaltes entspricht.

Zum Aushärten der Reaktionsharzmassen sollten die Temperaturen 130°C nicht überschreiten, da bei höheren Temperaturen Waferbrüche drohen. Eine gute Aushärtung der erfindungsgemäßen Reaktionsharzmasse wird mit einem einstündigen Härteprozeß bei 130°C erzielt. Doch auch bei niedrigeren Temperaturen kann die Masse vollständig ausgehärtet werden. Zur Erprobung anderer Härtungsbedingungen ist es möglich, den Aushärtungsgrad über die bei der chemischen Härtungsreaktion freiwerdende Reaktionswärme in einer thermoanalytischen Untersuchung zu bestimmen.

Bei der Härtung tritt keine Runzelung oder Schrumpfung der im Siebdruck erzeugten Reaktionsharzstrukturen auf. Das Druckbild bleibt somit unverändert erhalten.

Figur 1 zeigt einen schematischen Längsschnitt durch ein Oberflächenwellenbauelement, hier ein Oberflächenwellenfilter, auf dem im Siebdruckverfahren Strukturen 5 des erfindungsgemäßen Reaktionsharzes aufgetragen wurden. Ein Substrat 2 aus einem piezoelektrischen Werkstoff, zum Beispiel Lithiumniobat von ca. 500 µm Dicke, ist auf seiner Unterseite ganzflächig mit einer Kupferwanne 1 verklebt. Auf der Oberfläche des Substrats 2 befinden sich die Wandlerelektroden 3 und 4. Die Figur 1 zeigt einen Schnitt durch die "Finger" der kammartig ausgebildeten Elektrodenanordnungen 3, 4, wobei jeweils zwei Elektrodenkämme unterschiedlicher Polarität (mit "+" und "-" gekennzeichnet) mit ihren "Fingern" ineinandergeschoben sind und so zusammen ein Wandlerelement bilden, zum Beispiel einen Oberflächenwellensender 3, welcher das elektrische Signal in mechanische bzw. Schwingungssignale, die sogenannten Oberflächenwellen umwandelt, während mit 4 die Elektrodenanordnung des Oberflächenwellenempfängers bezeichnet ist. Dieser Empfänger wandelt die gefilterten Oberflächenwellen wieder in elektrische Signale um. Außerhalb des aktiven Wandlerbereiches auf der Oberfläche und entlang der Substratkanten 7 sind Strukturen 5 aus gehärtetem Reaktionsharz aufgebracht. Diese sorgen für eine Dämpfung der auslaufenden Oberflächenwellen und verhindern eine Reflexion der Wellen an der Substratkante 7. Wie in der Figur ersichtlich, wird das Harz Üblicherweise an zwei einander gegenüberliegenden Kanten auf der Oberfläche des Substrats in der "Laufrichtung" der Oberflächenwellen aufgebracht. Doch können auch sämtliche Kanten auf der Oberfläche des Substrats mit Harz beschichtet sein. In diesem Fall spricht man von einer Rundumbedämpfung. Gut zu erkennen sind auch die flachen Böschungswinkel der Harzstrukturen, welche zusätzlich eine Reflexion der Oberflächenwellen unterdrücken, da sie den "Übergang" der Welle vom Substrat 2 in die Dämpfungsmasse 5 erleichtern.

Die beispielhaft angeführten ausgehärteten Harze weisen geeignete Glasübergangstemperaturen auf. Dadurch bleiben die akustischen Eigenschaften der gehärteten Harzstrukturen auch bei erhöhter Temperatur stabil und unverändert gut angepaßt. Quantitativ läßt sich die Dämpfungswirkung aus dem durch eine Fourier-Transformation des Frequenzspektrums des zurückgewandelten elektrischen Signals ermitteln. Innerhalb eines bestimmten zeitlichen Abstands zum Hauptimpuls werden die Amplitudenhöhen der durch Reflexion erhaltenen Echos relativ zum Hauptimpuls gemessen. Die beobachtete Dämpfung, die mit den erfindungsgemäßen Reaktionsharzmassen erzielt wird, beträgt 45 - 55 dB. Bei längerem Betrieb eines Oberflächenwellenbauelements zeigen sich durch die Beschichtung mit dem erfindungsgemäßen Harz weitere Vorteile. Die Feuchtigkeitsaufnahme der gehärteten Harzstrukturen ist gering. Da in den erfindungsgemäßen Harzen keine oder nur sehr wenig korrosionsaktive Ionen enthalten sind, sind diese auch für Anwendungen im Kontakt mit metallischen Elektrodenstrukturen oder anderen metallischen Teilen geeignet, da die Korrosion nicht begünstigt wird. Auch die thermische Belastbarkeit ist ausgezeichnet: kurzzeitige Temperaturerhöhungen bis 260°C, sowie mehrere Stunden bis 130°C wie sie im Fertigungsprozeß auftreten können, werden von den gehärteten Harzstrukturen unverändert und unbeschadet überdauert. Bei der thermogravimetrischen Analyse zeigt sich der Beginn der Zersetzung des Harzes erst ab 300°C. Da das gehärtete Harz keinerlei flüchtige Bestandteile mehr enthält, kommt es zu keinen Ausgasungen beim Betrieb des Bauelements bzw. bei erhöhten Temperaturen, so daß ein Einbau von mit Harz beschichteten Bauteilen auch in gasdichte Gehäuse möglich wird.

## Patentansprüche

1. Akustisch angepaßte Reaktionsharzmasse zur dämpfenden Beschichtung von Oberflächenwellenbauelementen, enthaltend
a) ein oder mehrere Epoxidharze,
b) eine oder mehrere Di- oder Polycarbonsäuren bzw. saure Ester von Di- oder Polycarbonsäuren,
c) ein aliphatisches oder heteroaromatisches Amin in einem die Vernetzung der Reaktionsharzmasse katalysierenden Anteil sowie
d) Lösungsmittel,
wobei die Aminwasserstoff- und Säureäquivalente zusammen im Unterschuß gegenüber den Epoxidäquivalenten vorliegen und die vermischte Reaktionsharzmasse eine für die Applikation erforderliche Viskosität aufweist.

2. Reaktionsharzmasse nach Anspruch 1, **dadurch gekennzeichnet**, daß ein Epoxidharz vom Glycidylethertyp enthalten ist.

3. Reaktionsharzmasse nach Anspruch 2, **dadurch gekennzeichnet**, daß das Epoxidharz ein Festharz vom Diglycidylethertyp auf der Basis von Bisphenol A oder Phenol- bzw. Kresolnovolak ist.

4. Reaktionsharzmasse nach mindestens einem der Ansprüche 1 bis 3, **dadurch gekennzeichnet**, daß die Komponente a) ein teilepoxidiertes ungesättigtes Polymer enthält.

5. Reaktionsharzmasse nach Anspruch 4, **dadurch gekennzeichnet**, daß die Komponente a) ein Polybutadien enthält, bei dem 4 - 50 % der Doppelbindungen epoxidiert sind.

6. Reaktionsharzmasse nach mindestens einem der Ansprüche 1 bis 5, **dadurch gekennzeichnet**, daß die Komponente b) Trimethyladipinsäure enthält.

7. Reaktionsharzmasse nach mindestens einem der Ansprüche 1 bis 6, **dadurch gekennzeichnet**, daß die basische Komponente c) ein substituiertes Imidazol ist.

8. Reaktionsharzmasse nach mindestens einem der Ansprüche 1 bis 7, **dadurch gekennzeichnet**, daß die Aminkomponente eine oder mehrere N-H-Bindungen aufweist.

9. Reaktionsharzmasse nach mindestens einem der Ansprüche 1 bis 8, **dadurch gekennzeichnet**, daß das Lösungsmittel eine oder mehrere Komponenten umfaßt, welche ausgewählt sind aus der Gruppe Ether, Ester, Alkohole oder verwandter mehrfunktioneller Verbindungen, wobei der Siedepunkt des Lösungsmittelgemisches über 100°C beträgt

10. Reaktionsharzmasse nach Anspruch 9, **dadurch gekennzeichnet**, daß das Lösungsmittelgemisch aus Benzylalkohol und Ethoxypropylacetat besteht.

11. Reaktionsharzmasse nach einem der Ansprüche 1 bis 10, **dadurch gekennzeichnet**, daß weitere an sich bekannte Hilfsmittel zur Erzeugung einer siebdruckfähigen Paste enthalten sind.

12. Verwendung der Reaktionsharzmasse nach mindestens einem der Ansprüche 1 bis 11 zum Auftragen auf Oberflächenwellenbauelemente zur akustischen Dämpfung.

## Claims

1. Acoustically matched reaction resin composition for damping coating of surface wave components, containing
a) at least one epoxy resin,
b) at least one di- or polycarboxylic acid and/or acid ester of di- or polycarboxylic acids,
c) an aliphatic or heteroaromatic amine in a proportion sufficient to catalyse the cross-linking of the reaction resin composition, and
d) solvent,
the amine hydrogen equivalents and acid equivalents together being present in a substoichiometric amount with respect to the epoxy equivalents, and the mixed reaction resin composition having a viscosity which is adequate for application.

2. Reaction resin composition according to Claim 1, characterized in that an epoxy resin of the glycidyl ether type is present.

3. Reaction resin composition according to Claim 2, characterized in that the epoxy resin is a solid resin of the diglycidyl ether type on the basis of bisphenol A or phenol novolak and/or cresol novolak.

4. Reaction resin composition according to at least one of Claims 1 to 3, characterized in that the component a) contains a partly epoxidized unsaturated polymer.

5. Reaction resin composition according to Claim 4, characterized in that the component a) contains a polybutadiene in which 4 - 50% of the double bonds are epoxidized.

6. Reaction resin composition according to at least one of Claims 1 to 5, characterized in that the component b) contains trimethyladipic acid.

7. Reaction resin composition according to at least one of Claims 1 to 6, characterized in that the basic component c) is a substituted imidazole.

8. Reaction resin composition according to at least one of Claims 1 to 7, characterized in that the amine component has at least one N-H bond.

9. Reaction resin composition according to at least one of Claims 1 to 8, characterized in that the solvent comprises at least one component which is selected from the group comprising ethers, esters, alcohols or related polyfunctional compounds, the boiling point of the solvent mixture being above 100°C.

10. Reaction resin composition according to Claim 9, characterized in that the solvent mixture is composed of benzyl alcohol and ethoxypropyl acetate.

11. Reaction resin composition according to any one of Claims 1 to 10, characterized in that further adjuvants known per se for generating a screen-printable paste are contained therein.

12. Use of the reaction resin composition according to at least one of Claims 1 to 11 for applying to surface wave components for acoustic damping.

## Revendications

1. Composition de résine réactionnelle adaptée du point de vue acoustique pour recouvrir, avec un effet d'atténuation, des composants à ondes de surface, renfermant
a) une ou plusieurs résines époxy,
b) un ou plusieurs acides dicarboxyliques ou polycarboxyliques ou esters acides d'acides dicarboxyliques ou polycarboxyliques,
c) une amine aliphatique ou hétéroaromatique en un pourcentage qui catalyse la réticulation de la composition de résine réactionnelle, ainsi que
d) du solvant,
dans laquelle les équivalents d'hydrogéne d'amine et d'acide sont présents conjointement en une quantité insuffisante par rapport aux équivalents époxy et la composition de résine réactionnelle mélangée a une viscosité nécessaire pour l'application.

2. Composition de résine suivant la revendication 1, caractérisée par le fait qu'elle renferme une résine époxy du type étheroxyde glycidylique.

3. Composition de résine suivant la revendication 2, caractérisée par le fait que la résine époxy est une résine solide du type étheroxyde diglycidylique à base de bisphénol A ou de phénol-novolaque ou de crésol-novolaque.

4. Composition de résine réactionnelle suivant au moins l'une des revendications 1 à 3, caractérisée par le fait que le constituant a) contient un polymère insaturé partiellement époxydé.

5. Composition de résine suivant la revendication 4, caractérisée par le fait que le constituant a) contient un polybutadiène, dans lequel de 4-50 % des liaisons doubles sont époxydées.

6. Composition de résine suivant au moins l'une des revendications 1 à 5, caractérisée par le fait que le constituant b) contient de l'acide triméthyladipique.

7. Composition de résine suivant au moins l'une des revendications 1 à 6, caractérisée par le fait que le constituant basique c) est un imidazol substitué.

8. Composition de résine suivant au moins l'une des revendications 1 à 7, caractérisée par le fait que le constituant amine a une ou plusieurs liaisons N-H.

9. Composition de résine suivant au moins l'une des revendications 1 à 8, caractérisée par le fait que le solvant comprend un ou plusieurs constituants, qui sont choisis dans les groupes éthers, esters, alcools ou composés multifonctionnels apparentés, le point d'ébullition du mélange de solvant étant supérieur à 100°C.

10. Composition de résine suivant la revendication 9, caractérisée par le fait que le mélange de solvant est constitué par de l'alcool benzylique et de l'acétate d'éthoxypropyle.

11. Composition de résine suivant au moins l'une des revendications 1 à 10, caractérisée par le fait qu'elle renferme d'autres substances auxiliaires connues en soi servant à former une pâte adaptée pour la sérigraphie.

12. Utilisation de la composition de résine suivant au moins l'une des revendications 1 à 11 pour son dépôt sur des composants à ondes de surface pour l'atténuation acoustique.
